# EUROPEAN PATENT APPLICATION

(11) **EP 4 043 598 A1**
(43) Date of publication of application: **17.08.2022**
(21) Application number: 21156786.2
(22) Date of filing: 12.02.2021
(51) Int. Cl.: C22B 3/22, C22B 7/02, B01D 29/00, B09B 3/00, C22B 7/00, C22B 3/00, C22B 15/00, C22B 19/30, C22B 43/00

(54) **METHOD FOR POST-WASHING ASH**

(71) Applicant: AIK Technik AG, 6210 Sursee (CH)
(72) Inventor: WÖLM, Fabian, 6210 Sursee (CH)
(74) Representative: Maiwald Patent- und Rechtsanwaltsgesellschaft mbH

(57) **Abstract**

The present invention relates to a method for washing ash comprising the steps of:
a) collecting ash of an incineration process;
b) combining the ash with an aqueous medium to provide an aqueous slurry;
c) mixing the aqueous slurry for solving recyclable compounds from the solid ash particles;
d) separating the aqueous slurry into an aqueous liquid stream containing solved recyclable compounds and a stream containing the residual solid ash particles; characterized in that
e) the stream containing the residual solid ash particles is combined and mixed with an aqueous washing medium to provide a post-wash aqueous slurry; and
f) the post-wash aqueous slurry is separated into an aqueous liquid post-wash stream containing residues of solved recyclable compounds and a post-washed stream containing the residual solid ash particles;
a device for washing ash comprising a vessel for combining and mixing the stream containing the residual solid ash particles with an aqueous washing medium to provide a post-wash aqueous slurry; and
the use of a vessel for combining and mixing the stream containing the residual solid ash particles with an aqueous washing medium to provide a post-wash aqueous slurry for reducing the amount of recyclable compounds in the residual solid ash particles in said method and/or device.

## Description

The present invention relates to a method and device for washing ash, such as fly ash or sewage sludge ash characterized in post-washing ash for improving the extraction rate of solved recyclable compounds.

### Technical background

Ash from exhaust gases of incineration processes such as waste incineration or sewage sludge incineration are usually used for land filling or to a lesser extent as additive for cement and concrete in construction industry and road construction.

Due to higher environmental constrains especially in Europe but also increasingly in other countries around the world ash underlies governmental regulations especially regarding the content of potentially environmentally harmful components such as heavy metal compounds. Therefore, in order to avoid costly treatment of the ash as hazardous waste the ash must be treated in order to reduce the amount of said potentially environmentally harmful components. Additionally, ash is a source for other valuable compounds such as phosphorous containing compounds, which can be transformed into fertilizers.

One established method of reducing the amounts of recyclable compounds, such as heavy metal compounds, e.g. mercury, lead, cadmium, copper and zinc, or phosphorous containing compounds, is a wet chemical process called FLUWA, in which the heavy metal compounds are extracted from the ash by solving them in water or acidic water (Bühler, A; Schlumberger, S.: Schwermetalle aus der Flugasche zurückgewinnen. In: Schenk, K. (Hrsg.): KVA-Rückstände in der Schweiz. Der Rohstoff mit Mehrwert. Bundesamt fur Umwelt, Bern, 2010). Thereby, an aqueous slurry of ash and the liquid aqueous medium is provided and mixed in a cascade of two or three extraction vessels in which the recyclable compounds are solved in the liquid aqueous medium and then separated from the residual particulate ash by vacuum filtration on a vacuum band filter or a belt filter. On the vacuum band filter the aqueous slurry is transported on a band made of filter material under vacuum, which allows separation of an aqueous liquid stream, which contains the solved recyclable compounds from a stream containing the residual solid ash particles in form of a cake, which remains on the filter band. In a belt filter, the band made of filter material is supported by a belt, usually a rubber belt. Said vacuum filtration method allows to reduce the liquid content in the cake on the filter band to an amount of about 40 to 50 %. Said liquid content still contains solved recyclable compounds and optionally acid. In order to reduce the amount of these compounds in the residual solid ash particles the cake on the filter band is submitted to a displacement washing step, in which the cake on the filter band still under vacuum conditions is subjected to water, which shall replace the remaining aqueous liquid comprising the solved compounds and acid as the vacuum sucks the aqueous liquid out of the cake and the washing water into the cake. The cake washed as such still has a water content of 40 to 50 % but a lower amount of solved heavy metal compounds.

One major problem is that the displacement washing step is not very effective and considerable amounts of recyclable compounds and optional other compounds such as salts and acid remain in the ash so that the resulting dried ash still comprises potentially environmentally harmful components in amounts, which can be above the regulatory limits, or other recyclable components, such as alkali or earth alkali salts, or phosphorous containing compounds, remain in the washed ash particles and cannot be fully separated from the solid phase.

Thus, there is a need in the art for an improved method for washing ash with an increased removal rate for recyclable components.

It has surprisingly been found that the removal rate for recyclable components can be significantly increased by a post-wash procedure in which the residual solid ash particles is combined and mixed with a washing liquid to form a slurry and the slurry is again separated into a liquid stream and residual solid post-wash ash particles.

### Summary of the invention

In one aspect the present invention relates to a method for washing ash comprising the steps of:
a) collecting ash of an incineration process;
b) combining the ash with an aqueous medium to provide an aqueous slurry;
c) mixing the aqueous slurry for solving recyclable compounds from the solid ash particles;
d) separating the aqueous slurry into an aqueous liquid stream containing solved recyclable compounds and a stream containing the residual solid ash particles; characterized in that
e) the stream containing the residual solid ash particles is combined and mixed with an aqueous washing medium to provide a post-wash aqueous slurry; and
f) the post-wash aqueous slurry is separated into an aqueous liquid post-wash stream containing residues of solved recyclable compounds and a post-washed stream containing the residual solid ash particles.

In another aspect the present invention relates to a device for washing ash comprising:
- at least one extraction vessel;
- a line for removing the aqueous slurry from the at least one extraction vessel, preferably the last downstream extraction vessel, to means for separating the aqueous slurry into an aqueous liquid stream containing solved recyclable compounds and a stream containing the residual solid ash particles;
- means for separating the aqueous slurry into an aqueous liquid stream containing solved recyclable compounds and a stream containing the residual solid ash particles;
- a vessel for combining and mixing the stream containing the residual solid ash particles with an aqueous washing medium to provide a post-wash aqueous slurry;
- means for transporting the stream containing the residual solid ash particles from the means for separating the aqueous slurry into an aqueous liquid stream containing solved recyclable compounds and a stream containing the residual solid ash particles to the vessel;
- means for separating the post-wash aqueous slurry into an aqueous liquid post-wash stream containing residues of solved recyclable compounds and a post-wash stream containing the residual solid ash particles.

In yet another aspect the present invention relates to the use of a vessel for combining and mixing the stream containing the residual solid ash particles with an aqueous washing medium to provide a post-wash aqueous slurry for reducing the amount of recyclable compounds in the residual solid ash particles in the method and/or the device as described above or below.

It has surprisingly been found that with the additional post-washing procedure as described in process steps e) and f) of the method of the invention and the accordant means of the device of the invention, further illustrated as described above or below, the residual amounts of heavy metal components as well as optionally residual amounts of other soluble components, such as salts, and optionally residual amounts of acid can be significantly reduced.

The additional post-washing procedure is flexible and can be adapted to the individual needs of the plant in regard of regulatory limits and the composition of the ash to be washed.

### Detailed description of the invention

### Method

In a first aspect the present invention relates to a method for washing ash comprising the steps of:
a) collecting ash of an incineration process;
b) combining the ash with an aqueous medium to provide an aqueous slurry;
c) mixing the aqueous slurry for solving recyclable compounds from the solid ash particles;
d) separating the aqueous slurry into an aqueous liquid stream containing solved heavy metal compounds and a stream containing the residual solid ash particles; characterized in that
e) the stream containing the residual solid ash particles is combined and mixed with an aqueous washing medium to provide a post-wash aqueous slurry; and
f) the post-wash aqueous slurry is separated into an aqueous liquid post-wash stream containing residues of solved recyclable compounds and a post-washed stream containing the residual solid ash particles.

The aqueous slurry can be separated into the aqueous liquid stream containing solved recyclable compounds and the stream containing the residual solid ash particles in step d) by all suitable means for separating liquids from particulate solids such as filtration, sedimentation, decantation, centrifugation, distillation, extraction, precipitation or evaporation.

Usually, the aqueous slurry is separated into the liquid stream and the particulate stream by means of filtration such as vacuum filtration e.g. using a vacuum belt filter.

It is especially preferred that the aqueous slurry is separated into the aqueous liquid stream containing solved heavy metal compounds and the stream containing the residual solid ash particles in step d) by vacuum-filtration, preferably using a vacuum band filter.

During vacuum filtration using a vacuum band filter, the aqueous slurry after mixing is preferably applied onto a moving band that is made from a filter material.

Said filter material is preferably has an average pore diameter which is suitable to retain the solid ash particles on the filter band and allows the liquid to pass through the pores.

The filter material is typically made from polymer material, which is preferably selected from polyester or polypropylene.

The passage of the liquid through the pores is preferably further supported by applying a vacuum on the side of the filter band, which is on the opposite of the side of the filter band onto which the aqueous slurry is applied. By applying vacuum the liquid is sucked through the pores of the filter band thereby drying the remaining aqueous slurry to a stream containing the residual solid ash particles. Said stream containing the residual solid ash particles preferably has solids content of from 50 to 60 wt%.

The vacuum band filter can comprise a belt, such as a rubber belt, for supporting the moving band. A vacuum band filter comprising such as belt, is usually called a belt filter, like a rubber belt filter.

The vacuum filter band can be any commercially available vacuum filter band suitable for filtering aqueous slurry containing solid ash particles.

Typically the vacuum filter band has a length of from 5 m to 50 m, preferably from 7 m to 40 m, more preferably from 10 m to 25 m.

Further, the vacuum filter band preferably has a filtering area of from 2 m² to 150 m², more preferably from 3 m² to 125 m², still more preferably from 4 m² to 100 m² and most preferably from 5 m² to 65 m².

The belt speed of the vacuum band filter is typically from 2 m/min to 15 m/min, preferably 4 m/min to 12 m/min, more preferably 5 m/min to 10 m/min and most preferably around 7 m/min.

Before combining the stream containing the residual solid ash particles with an aqueous washing medium the stream containing the residual solid ash particles is preferably collected and transported to a vessel.

When using a vacuum band filter, the stream containing the residual solid ash particles is preferably withdrawn from the vacuum band filter and transported to a vessel for preparing the post-wash aqueous slurry.

For withdrawing the stream containing the residual solid ash particles is preferably scraped from the vacuum band filter by using suitable means such as a scraper.

The withdrawn stream is then preferably transported to the vessel by using suitable means such as a transportation belt or a scraper conveyor.

The vessel for combining and mixing the stream containing the residual solid ash particles with the aqueous washing medium can be any vessel suitable for combining and mixing an aqueous slurry.

The vessel preferably has a volume of from 0.1 to 3.0 m³, more preferably from 0.1 to 2.0 m³ and most preferably from 0.1 to 1.0 m³.

The vessel preferably has an inlet for the aqueous washing medium and an inlet for the stream containing the residual solid ash particles.

Further, the vessel preferably has an outlet for the post-wash aqueous slurry.

The post-wash aqueous slurry is preferably actively mixed in the vessel, more preferably stirred by means of a stirring device suitable for mixing the post-wash aqueous slurry. The stirring device can have any commercially available form suitable for stirring vessels. Usually the stirring device is a stirring unit comprising one or more arms, usually in form of blades or propellers, attached to a rotating rod situated vertically in the vessel body as such that the arms are free floating within the body of the vessel. Suitable stirring units are propeller stirrers, blade stirrers, paddle stirrers, impeller stirrers, anchor stirrers, cross-arm stirrers or the like.

It is preferred that the stirring device is continuously working thereby ensuring a continuous mixing of the aqueous slurry.

The average residence time of the post-wash aqueous slurry in the vessel is preferably from 0.5 min to 10 min, preferably from 1 min to 8 min, more preferably from 3 min to 6 min and most preferably around 5 min.

During mixing the solid ash particles of the post-wash aqueous slurry are preferably kept in suspension and thereby allowing the solved recyclable compounds such as the solved heavy metal compounds, alkali or earth alkali salts, or phosphorous containing compounds and optionally acid to be diluted and solved in the aqueous washing medium as such that these compounds do not adhere to the ash particles.

The aqueous washing medium is preferably selected from is pH neutral water or water comprising an acid, preferably selected from HF, HCl, H₂SO₄, HNO₃, H₃PO₄ or mixtures thereof.

When using pH neutral water the aqueous washing medium usually only dilutes the solved heavy metal compounds, optionally other solved compounds, such as alkali or earth alkali salts, and optionally acid.

When using water comprising an acid the aqueous washing medium usually not only dilutes the solved heavy metal compounds, optionally other solved compounds, such as alkali or earth alkali salts, and optionally acid but also solves residual soluble compounds from the solid ash particles such as residual soluble heavy metal compounds or residual alkali or earth alkali salts or residual phosphorous containing compounds. Additionally, unwanted re-precipitation of already solved recyclable compounds due to an increased pH value during the washing with water can be prevented by using water comprising an acid as aqueous washing medium.

The post-wash aqueous slurry is preferably removed from the vessel and transported to means for separating the post-wash aqueous slurry into the aqueous liquid post-wash stream containing residues of solved recyclable compounds and the post-washed stream containing the residual solid ash particles.

Preferably the post-wash aqueous slurry is removed from the vessel by overflow.

The post-wash aqueous slurry is preferably transported by any suitable means for transporting an aqueous slurry such as a pipe or an overflow edge.

The post-wash aqueous slurry can be separated into the aqueous liquid post-wash stream containing residues of solved recyclable compounds and the post-washed stream containing the residual solid ash particles in step f) by all suitable means for separating liquids from particulate solids such as filtration, sedimentation, decantation, centrifugation, distillation, extraction, precipitation or evaporation.

Usually, the liquid stream is separated from the particulate stream by means of filtration such as vacuum filtration e.g. using a vacuum belt filter.

It is especially preferred that post-wash aqueous slurry is separated into the aqueous liquid stream containing solved recyclable compounds and the stream containing the residual solid ash particles in step d) by vacuum-filtration, preferably using a vacuum band filter.

The vacuum band filter preferably used in process step f) preferably has the same properties and requirements as described for the vacuum band filter preferably used in process step d) above.

It is especially preferred that the separation steps d) and f) are conducted by vacuum-filtration using the same single vacuum band filter.

When using the same single vacuum band filter the post-wash aqueous slurry is preferably transported from the vessel to the same single vacuum band filter and is returned to said same single vacuum band filter at the position, where the stream containing the residual solid ash particles is withdrawn from the single vacuum band filter. This measure allows that the vacuum of the single vacuum band filter is maintained.

In a preferred embodiment the process steps e) and f) are repeated one to five times, i.e. once, twice, three times, four times or five times. Preferably, the process steps e) and f) are repeated two, three or four times, most preferably three times.

This means that after separating a first post-washed stream containing the residual solid ash particles in process step f) said first post-washed stream is again combined and mixed with an second aqueous washing medium to provide a second post-wash aqueous slurry, which is then separated into an second aqueous liquid post-wash stream containing residues of solved recyclable compounds and a second post-washed stream containing the residual solid ash particles (one time repetition).

These steps can again be repeated once (second time repetition), twice (third time repetition), three times (fourth time repetition), or four times (fifth time repetition), preferably once, twice or three times and most preferably twice.

In the especially preferred embodiment of a single vacuum band filter the post-washed stream containing the residual solid ash particles separated from the aqueous liquid post-wash stream containing residues of solved recyclable compounds in process step f) is again withdrawn from the vacuum band filter further downstream from the position, where the stream containing the residual solid ash particles is withdrawn from the single vacuum band filter.

The withdrawn post-washed stream containing the residual solid ash particles is then preferably transported to a second vessel.

In said second vessel the post-washed stream containing the residual solid ash particles is preferably combined and mixed with a second aqueous washing medium to provide a second post-wash aqueous slurry.

Said second post-wash aqueous slurry is then preferably transported to the single vacuum band filter.

The second post-wash aqueous slurry is preferably returned to said same single vacuum band filter at the position, where the post-washed stream containing the residual solid ash particles is withdrawn from the single vacuum band filter. This measure allows that the vacuum of the single vacuum band filter is maintained.

Preferably, said additional process steps preferably have the same means, properties and requirements as described for process steps e) and f) above.

Said additional process steps can then be repeated once (second time repetition), twice (third time repetition), three times (fourth time repetition), or four times (fifth time repetition), preferably twice or three times and most preferably twice. Thereby, in each repetition the post-washed stream is typically withdrawn from a position on the single vacuum band filter further downstream from the previous position from which the previous post-wash stream is withdrawn.

The repetition of the process steps e) and f) allows a more efficient washing of the solved compounds and optional acid from the solid ash particles thus efficiently reducing the residual amounts of solved compounds, such as solved heavy metal compounds, alkali and earth alkali salts or phosphorous containing compounds, and acid.

Additionally, the repetition of the process steps e) and f) can be used to additional solve residual soluble compounds from the solid ash particles, such as soluble heavy metal compounds, soluble alkali and earth alkali salts and phosphorous containing compounds. The residual soluble compounds are usually solved from the solid ash particles when using water with an acid as aqueous washing medium. Additionally, by using water with an acid as aqueous washing medium the re-precipitation of already solved compounds can be prevented. Preferably, water with an acid is used as aqueous washing medium in one or two of the upstream post-wash cycles (process steps e) and f) and/or first time repetition), whereas water is used as aqueous washing medium in the following downstream post-wash cycles (second to fifth time repetition).

In one preferred embodiment water with an acid is used as aqueous washing medium only in the first post-wash cycle of process steps e) and f). In all following post-wash cycles of the repetitions of process steps e) and f) then water is used as aqueous washing medium.

Preferably, process steps d) to f) and all optional repetitions of process steps e) an f) are continuous process steps.

The ash is preferably selected from fly ash collected from the incineration of waste, preferably from the exhaust gas of the incineration of waste or from sewage sludge ash collected from the incineration of sewage sludge, preferably from the exhaust gas or the fluidized bed furnace of the incineration of sewage sludge.

Usually, the ash is collected from filter mediums which are passed by the exhaust gas from the incineration process and which filter the particulate residues from the exhaust gas or precipitate volatile compounds from the exhaust gas.

The ash is usually collected and stored in storage vessels.

The ash is preferably combined and mixed with an aqueous medium in at least one extraction vessel to provide an aqueous slurry.

The aqueous slurry can be mixed in one extraction vessel.

It is however preferred that the aqueous slurry is mixed in two to five, such as two, three, four or five extraction vessels, preferably in two or three extraction vessels.

The two to five extraction vessels are preferably connected in series, wherein the aqueous slurry is passed from one extraction vessel to the next extraction vessel.

The at least one extraction vessel can have a conical or a round bottom. It is preferred that the at least one extraction vessel, preferably each extraction vessel, has a round bottom.

The at least one extraction vessel, preferably all of the extraction devices, have a stirring device situated inside of its body suitable for mixing the aqueous slurry. The stirring device can have any commercially available form suitable for stirring vessels. Usually the stirring device is a stirring unit comprising one or more arms, usually in form of blades or propellers, attached to a rotating rod situated vertically in the vessel body as such that the arms are free floating within the body of the vessel. Suitable stirring units are propeller stirrers, blade stirrers, paddle stirrers, impeller stirrers, anchor stirrers, cross-arm stirrers or the like.

It is preferred that during the method of the invention the stirring device is continuously working thereby ensuring a continuous mixing of the aqueous slurry.

During mixing the solid ash particles of the aqueous slurry are preferably kept in suspension and thereby allowing recyclable compounds of the ash particles such as the heavy metal compounds and optionally other soluble compounds, such as alkali salts, earth alkali salts or phosphorous containing compounds, to be solved.

The recyclable compounds can be selected from soluble heavy metal compounds and other soluble compounds.

The heavy metal compounds are preferably compounds comprising lead, cadmium, copper and zinc.

The other soluble compounds are in principle all compounds of the ash particles, which are soluble in water and/or acidic water, preferably alkali and earth alkali salts and phosphorous containing compounds.

The average residence time of the aqueous slurry in one extraction vessel, preferably in each extraction vessel, is independently from 5 min to 300 min, preferably from 10 min to 150 min, more preferably from 12 min to 100 min and most preferably from 15 min to 60 min.

The ash can be combined with the aqueous medium to provide an aqueous slurry in the at least one extraction vessel, preferably one extraction vessel or the first extraction vessel of the extraction vessels connected in series. In said embodiment the ash and the aqueous medium are introduced into the at least one extraction vessel, preferably one extraction vessel or the first upstream extraction vessel of the extraction vessels connected in series, in separate streams.

In another embodiment the ash is combined with the aqueous medium to provide an aqueous slurry before introducing the aqueous slurry into the at least one extraction vessel, preferably one extraction vessel or the first upstream extraction vessel of the extraction vessels connected in series.

The ash and various aqueous media separately or aqueous slurry, preferably the ash and various aqueous media separately, can be intermittently introduced e.g. by means of a valve or metering device. However, it is preferred that the ash or aqueous slurry, preferably the ash, is introduced continuously.

The aqueous slurry can be intermittently removed e.g. by means of a valve. However, it is preferred that the aqueous slurry is removed continuously by overflow e.g. through an exit in the upper side part of the at least one extraction vessel.

Preferably, the aqueous slurry is continuously introduced into and removed from the at least one extraction vessel.

By introducing and removing the aqueous slurry continuously to and from the at least one extraction vessel a uniform filling level of the at least one extraction vessel can be obtained.

Agglomerates of solid ash particles are preferably removed from the round bottom of the at least one extraction vessel, preferably from the round bottom of each extraction vessel. It is thereby preferred that the agglomerates are removed periodically. The intermittent period for periodically removing the agglomerates is preferably in the range of from 1 min to 120 min, preferably from 3 min to 45 min, most preferably from 5 min to 30 min.

In some embodiments, especially when using extraction vessels having a round bottom only small amounts of agglomerates sediment at the bottom of the at least one extraction vessel. In said embodiment the intermittent period for periodically removing the agglomerates can be up to 600 min or longer. In some embodiments no agglomerates need to be removed.

When using extraction vessels with conical bottom for mixing the aqueous slurry the intermittent period for periodically removing the agglomerates is usually about 5 min to 120 min.

Preferably the ash is introduced into the one extraction vessel or the first upstream extraction vessel of two to five extraction vessels connected in series in particulate form, preferably through a feeding line from the storage vessel.

It is preferred that the ash is introduced into the one extraction vessel or the first upstream extraction vessel of two to five extraction vessels connected in series continuously.

The particulate ash is preferably combined with the aqueous medium in said one or first extraction vessel to provide the aqueous slurry.

The aqueous medium is preferably pH neutral water or water comprising an acid preferably selected from HF, HCl, H₂SO₄, HNO₃, H₃PO₄ or mixtures thereof.

In one embodiment the aqueous medium is pH neutral water, i.e. water having a pH of around 7. This means that the water does not include an acid or a base.

In another embodiment the aqueous medium is water comprising an acid. Said acid is preferably selected from HF, HCl, H₂SO₄, HNO₃, H₃PO₄ or mixtures thereof. The aqueous medium thereby can be acidic wastewater which is recycled from a different washing step of the in the incineration process, such as e.g. the acidic scrubber wastewater which is recycled from the wet flue gas cleaning.

The aqueous medium is preferably introduced into the one extraction vessel or the first upstream extraction vessel of two to five extraction vessels connected in series continuously.

In some embodiments the pH of the aqueous slurry in the one extraction vessel or the first upstream extraction vessel of two to five extraction vessels connected in series is adapted by introducing an alkaline medium into said vessel. The alkaline medium is preferably a lime milk suspension or a NaOH containing aqueous solution.

It is preferred that the alkaline medium is introduced periodically into the one extraction vessel or the first upstream extraction vessel of two to five extraction vessels connected in series.

It is preferred that no other streams are introduced into the downstream extraction vessel(s) of the two to five extraction vessels connected in series with the exception of the aqueous slurry removed from the accordant upstream extraction vessel.

In some embodiments additional aqueous medium can be introduced into said downstream extraction vessel(s). Said additional aqueous medium can be the same or different to the aqueous medium introduced into the first upstream extraction vessel.

The same additional aqueous medium can be introduced to increase dilution of the particulate ash in the aqueous slurry.

A different additional aqueous medium can be introduced either to vary the pH of the aqueous slurry and/or to introduce different acidic ions for increasing the solution of the heavy metal compounds.

The additional aqueous medium can be different from the aqueous medium introduced into the first upstream extraction vessel in a different pH and/or in the presence of a different acid or in the presence of a base.

The aqueous slurry is then separated into aqueous liquid streams and streams containing the residual solid ash as described in process steps d) to f) and the optional repetition steps of process steps e) and f) as described above or below.

Process steps d) to e) in all embodiments as described above or below can be conducted twice or more, preferably twice, in parallel, by an arrangement of means for conducting the process steps d) to e) arranged in parallel.

The liquid streams can then be further processed e.g. by recycling the solved recyclable compounds e.g. by precipitating the heavy metal compounds and optionally other solved compounds such as alkali or earth alkali salts, or phosphorous containing compounds using suitable methods known in the art.

The precipitated compounds can then be further processed and recycled.

The post-washed stream containing the residual solid ash particles usually has a solids content of from 50 to 60 wt%. Said stream can be dried. The resulting ash contains considerably lower amounts of potentially environmentally harmful compounds such as heavy metal compounds and usually meets the requirements of state regulation for use in landfill or construction industry.

### Device

In another aspect the present invention relates to a device for washing ash comprising:
- at least one extraction vessel;
- a line for removing the aqueous slurry from the at least one extraction vessel, preferably the last downstream extraction vessel, to means for separating the aqueous slurry into an aqueous liquid stream containing solved recyclable compounds and a stream containing the residual solid ash particles;
- means for separating the aqueous slurry into an aqueous liquid stream containing solved recyclable compounds and a stream containing the residual solid ash particles;
- a vessel for combining and mixing the stream containing the residual solid ash particles with an aqueous washing medium to provide a post-wash aqueous slurry;
- means for transporting the stream containing the residual solid ash particles from the means for separating the aqueous slurry into an aqueous liquid stream containing solved recyclable compounds and a stream containing the residual solid ash particles to the vessel;
- means for separating the post-wash aqueous slurry into an aqueous liquid post-wash stream containing residues of solved recyclable compounds and a post-wash stream containing the residual solid ash particles; and
- means for transporting the post-wash aqueous slurry from the vessel to the means for separating the post-wash aqueous slurry into the aqueous liquid post-wash stream containing residues of solved recyclable compounds and the post-wash stream containing the residual solid ash particles.

The device according to the invention is preferably adapted for the method of the invention as described above or below.

The means for separating the aqueous slurry into an aqueous liquid stream containing solved recyclable compounds and a stream containing the residual solid ash particles can be any means suitable for separating liquids from particulate solids such as filtration, sedimentation, decantation, centrifugation, distillation, extraction, precipitation or evaporation.

Preferably, the means for separating the aqueous slurry into an aqueous liquid stream containing solved recyclable compounds and a stream containing the residual solid ash particles are means for filtration, more preferably vacuum filtration.

It is especially preferred that the means for separating the aqueous slurry into an aqueous liquid stream containing solved recyclable compounds and a stream containing the residual solid ash particles is a vacuum band filter.

The means for separating the post-wash aqueous slurry into an aqueous liquid post-wash stream containing residues of solved recyclable compounds and a post-wash stream containing the residual solid ash particles can be any means suitable for separating liquids from particulate solids such as filtration, sedimentation, decantation, centrifugation, distillation, extraction, precipitation or evaporation.

Preferably, the means for separating the post-wash aqueous slurry into an aqueous liquid post-wash stream containing residues of solved recyclable compounds and a post-wash stream containing the residual solid ash particles are means for filtration, more preferably vacuum filtration.

It is especially preferred that the means for separating the post-wash aqueous slurry into an aqueous liquid post-wash stream containing residues of solved recyclable compounds and a post-wash stream containing the residual solid ash particles is a vacuum band filter.

The means for separating the aqueous slurry into an aqueous liquid stream containing solved recyclable compounds and a stream containing the residual solid ash particles and the means for separating the post-wash aqueous slurry into an aqueous liquid post-wash stream containing residues of solved recyclable compounds from a post-wash stream containing the residual solid ash particles are preferably the same single vacuum band filter.

The vacuum band filter suitable as means for separating the aqueous slurry into an aqueous liquid stream containing solved recyclable compounds and a stream containing the residual solid ash particles and/or means for separating the post-wash aqueous slurry into an aqueous liquid post-wash stream containing residues of solved recyclable compounds and a post-wash stream containing the residual solid ash particles, preferably the single vacuum band filter preferably has the following properties:
The filter material of the vacuum band filter is typically made from polymer material, which is preferably selected from polyester or polypropylene.

The passage of the liquid through the pores is preferably further supported by applying a vacuum on the side of the filter band which is on the opposite of the side of the filter band onto which the aqueous slurry is applied. By applying vacuum the liquid is sucked through the pores of the filter band thereby drying the remaining aqueous slurry to a stream containing the residual solid ash particles. Said stream containing the residual solid ash particles preferably has solids content of from 50 to 60 wt%.

The vacuum band filter can comprise a belt, such as a rubber belt, for supporting the moving band. A vacuum band filter comprising such as belt, is usually called a belt filter, like a rubber belt filter.

The vacuum filter band can be any commercially available vacuum filter band suitable for filtering aqueous slurry containing solid ash particles.

Typically the vacuum filter band has a length of from 5 m to 50 m, preferably from 7 m to 40 min, more preferably from 10 m to 25 m.

Further, the vacuum filter band preferably has a filtering area of from 2 m² to 150 m², more preferably from 30 m² to 125 m², still more preferably from 4 m² to 100 m² and most preferably from 5 m² to 65 m².

The belt speed of the vacuum band filter is typically from 2 m/min to 15 m/min, preferably 4 m/min to 12 m/min, more preferably 5 m/min to 10 m/min and most preferably around 7 m/min.

The device further comprises a vessel for combining and mixing the stream containing the residual solid ash particles with an aqueous washing medium to provide a post-wash aqueous slurry.

Said vessel can be any vessel suitable for combining and mixing an aqueous slurry.

The vessel preferably has a volume of from 0.1 to 3.0 m³, more preferably from 0.1 to 2.0 m³ and most preferably from 0.1 to 1.0 m³.

The vessel preferably has an inlet for the aqueous washing medium and an inlet for the stream containing the residual solid ash particles.

Further, the vessel preferably has an outlet for the post-wash aqueous slurry.

The vessel preferably does not include any means for regulating the feeding of the stream containing the residual solid ash particles or withdrawal of the post-wash aqueous slurry, such as valves. This allows continuous feeding and removal. Preferably the post-wash aqueous slurry is removed by overflow.

The vessel preferably comprises means for actively mixing the post-wash aqueous slurry such as a stirring device. Said means for actively mixing the post-wash aqueous slurry is preferably situated within the vessel.

The stirring device can have any commercially available form suitable for stirring vessels. Usually the stirring device is a stirring unit comprising one or more arms, usually in form of blades or propellers, attached to a rotating rod situated vertically or horizontally in the vessel body as such that the arms are free floating within the body of the vessel.

The rotating rod preferably is arranged vertically or horizontally.

The rotating rod is preferably rotated by a driving device such as a motor situated outside, preferably above the top of the extraction vessel.

Suitable stirring units are propeller stirrers, blade stirrers, paddle stirrers, impeller stirrers, anchor stirrers, cross-arm stirrers or the like.

The rotating velocity of the stirring device is preferably adapted to keep the solid ash particles of the post-wash aqueous slurry in suspension.

It is preferred that the stirring device is continuously working thereby ensuring a continuous mixing of the aqueous slurry.

The device further comprises means for transporting the stream containing the residual solid ash particles from the means for separating the aqueous slurry into an aqueous liquid stream containing solved recyclable compounds and a stream containing the residual solid ash particles to the vessel. Such transportation means can be any means suitable for transporting the stream containing the residual solid ash particles such as e.g. a transportation belt or a scraper conveyor.

Preferably, said transportation means are directly connected to the means for separating the aqueous slurry into an aqueous liquid stream containing solved recyclable compounds and a stream containing the residual solid ash particles and the vessel for combining and mixing the stream containing the residual solid ash particles with an aqueous washing medium to provide a post-wash aqueous slurry.

The device preferably comprises means for withdrawing the stream containing the residual solid ash particles from the means for separating the aqueous slurry into an aqueous liquid stream containing solved recyclable compounds and a stream containing the residual solid ash particles, such as a scraper.

Further, the device can comprise means for transferring the post-wash aqueous slurry from the vessel to the means for separating the post-wash aqueous slurry into the aqueous liquid post-wash stream containing residues of solved recyclable compounds and the post-wash stream containing the residual solid ash particles. Said transfer means are preferably any means suitable for transferring an aqueous slurry such as a pipe or an overflow edge.

Said transfer means are preferably directly connected to the vessel for combining and mixing the stream containing the residual solid ash particles with an aqueous washing medium to provide a post-wash aqueous slurry and the means for separating the post-wash aqueous slurry into the aqueous liquid post-wash stream containing residues of solved recyclable compounds and the post-wash stream containing the residual solid ash particles, most preferably the single vacuum filter band.

When using a single vacuum filter band as means for separating the aqueous slurry into an aqueous liquid stream containing solved recyclable compounds and a stream containing the residual solid ash particles and means for separating the post-wash aqueous slurry into an aqueous liquid post-wash stream containing residues of solved recyclable compounds from a post-wash stream containing the residual solid ash particles, the means for transferring the post-wash aqueous slurry is preferably situated as such that the post-wash aqueous slurry is returned to the single vacuum band filter at the position, where the stream containing the residual solid ash particles is withdrawn from the single vacuum band filter, so that the vacuum of the single vacuum band filter is maintained.

In a preferred embodiment the vessel for combining and mixing the stream containing the residual solid ash particles with an aqueous washing medium to provide a post-wash aqueous slurry is preferably situated vertically above the single vacuum band filter.

In said embodiment the stream containing the residual solid ash particles is removed from the single vacuum band filter by accordant means, such as a scraper, and actively transported upwards by accordant transportation means, such as a transport belt or a scraper conveyor, to the vessel. From the vessel the post-wash aqueous slurry is transferred back to the single vacuum band filter through accordant transfer means, such as a pipe or an overflow edge, preferably passively, i.e. by gravitation. It is preferred that the post-wash aqueous slurry is not actively withdrawn from the vessel but transfers to the transfer means by overflow. Preferably, the transfer means are situated as such that the post-wash aqueous slurry is returned to the single vacuum band filter at the position, where the stream containing the residual solid ash particles is withdrawn from the single vacuum band filter, so that the vacuum of the single vacuum band filter is maintained.

In one embodiment it is preferred that the device contains one set of said vessel for combining and mixing the stream containing the residual solid ash particles with an aqueous washing medium to provide a post-wash aqueous slurry, means for transporting the stream containing the residual solid ash particles from the means for separating the post-wash aqueous slurry into an aqueous liquid post-wash stream containing residues of solved recyclable compounds and a post-wash stream containing the residual solid ash particles to the vessel and optionally means for transferring the post-wash aqueous slurry from the vessel to the means for separating the post-wash aqueous slurry into the aqueous liquid post-wash stream containing residues of solved recyclable compounds and the post-wash stream containing the residual solid ash particles.

In another embodiment it is preferred that the device contains two to six sets, such as two, three, four, five or six sets, preferably three or four sets, of said vessel for combining and mixing the stream containing the residual solid ash particles with an aqueous washing medium to provide a post-wash aqueous slurry, means for transporting the stream containing the residual solid ash particles from the means for separating the post-wash aqueous slurry into an aqueous liquid post-wash stream containing residues of solved recyclable compounds and a post-wash stream containing the residual solid ash particles to the vessel and optionally means for transferring the post-wash aqueous slurry from the vessel to the means for separating the post-wash aqueous slurry into the aqueous liquid post-wash stream containing residues of solved recyclable compounds and the post-wash stream containing the residual solid ash particles.

Said sets are preferably situated downstream from each other along the single vacuum band filter as such that there is a distance between the sets. Thereby, the aqueous slurry is firstly introduced to the single vacuum band filter at its most upstream part and transported on the band filter downstream, thereby separating the aqueous slurry into the aqueous liquid stream containing solved recyclable compounds and the stream containing the residual solid ash particles. When transported to the transportation means the stream containing the residual solid ash is transported to the vessel to provide a post-wash aqueous slurry, which is optionally returned to the vacuum band filter through the transfer means. Back on the single vacuum band filter the post-wash aqueous slurry is transported on the band filter downstream, thereby separating the post-wash aqueous slurry into an aqueous liquid stream containing solved recyclable compounds and a stream containing the residual solid ash particles along said distance to the next set of transport means to the vessel, vessel and transport means back to the single vacuum band filter. Said procedure can be repeated one to four times. At the most downstream part of the single vacuum filter band the post-washed stream containing the residual solid ash particles is removed from the single vacuum filter band for further processing.

It is preferred that each set of said vessel for combining and mixing the stream containing the residual solid ash particles with an aqueous washing medium to provide a post-wash aqueous slurry, means for transporting the stream containing the residual solid ash particles from the means for separating the aqueous slurry into an aqueous liquid stream containing solved recyclable compounds and a stream containing the residual solid ash particles to the vessel and optional means for transferring the post-wash aqueous slurry from the vessel to the means for separating the post-wash aqueous slurry into the aqueous liquid post-wash stream containing residues of solved recyclable compounds and the post-wash stream containing the residual solid ash particles meets all the properties and requirements of said vessel for combining and mixing the stream containing the residual solid ash particles with an aqueous washing medium to provide a post-wash aqueous slurry, means for transporting the stream containing the residual solid ash particles from the means for separating the aqueous slurry into an aqueous liquid stream containing solved recyclable compounds and a stream containing the residual solid ash particles to the vessel and means for transferring the post-wash aqueous slurry from the vessel to the means for separating the post-wash aqueous slurry into the aqueous liquid post-wash stream containing residues of solved recyclable compounds and the post-wash stream containing the residual solid ash particles as described above or below.

In one specific embodiment the device can comprise two or more sets, preferably two sets of the means for separating the aqueous slurry into an aqueous liquid stream containing solved recyclable compounds and a stream containing the residual solid ash particles, the vessel for combining and mixing the stream containing the residual solid ash particles with an aqueous washing medium to provide a post-wash aqueous slurry, the means for transporting the stream containing the residual solid ash particles from the means for separating the aqueous slurry into an aqueous liquid stream containing solved recyclable compounds and a stream containing the residual solid ash particles to the vessel and the means for separating the post-wash aqueous slurry into an aqueous liquid post-wash stream containing residues of solved recyclable compounds and a post-wash stream containing the residual solid ash particles in all embodiments including all repeating sets as described above. These two or more sets, preferably two sets, are then arranged in parallel.

The device preferably contains one or more collection system and storage means for collecting and storing the aqueous liquid stream containing solved recyclable compounds and the one or more aqueous liquid post-wash stream containing residues of solved recyclable compounds. Said storage device is preferably directly connected to the collection system. The collection system is preferably situated vertically below the filter band of the single vacuum band filter and comprises at least one, preferably one vessel for receiving the aqueous liquid streams and transport means, such as one or more pipes, for transporting the aqueous liquid streams to the storage means.

The device preferably further contains storage means for storing the post-washed stream containing the residual solid ash particles. Said storage device is preferably situated at the downstream end of the means for separating an aqueous liquid post-wash stream containing residues of solved heavy metal compounds from a post-wash stream containing the residual solid ash particles, preferably at the downstream end of the single vacuum filter band.

The device further comprises at least one extraction vessel upstream of the means for separating the aqueous slurry into an aqueous liquid stream containing solved recyclable compounds and a stream containing the residual solid ash particles.

Preferably, the device comprises two to five, preferably two or three extraction vessels. The two to five extraction vessels are preferably connected in series, wherein the aqueous slurry is passed from one extraction vessel to the next extraction vessel.

Each extraction vessel can have a conical bottom or a round bottom.

At least one of the two to five extraction vessels, such as one, two, three, four or five of the extraction vessels, preferably all of the extraction vessels has/have a round bottom.

In said embodiment the device additionally comprises a feeding line for feeding the aqueous slurry from an upstream extraction vessel of the extraction vessels connected in series to a downstream extraction vessel of the extraction vessels connected in series. Preferably the device comprises a feeding line between each of the extraction vessels connected in series as such that the aqueous slurry is fed from the first upstream extraction vessel through the optional further downstream extraction vessel(s) to the last downstream extraction vessel. The at least one extraction vessel, preferably the last downstream extraction vessel, is preferably directly connected to the means for separating the aqueous slurry into an aqueous liquid stream containing solved recyclable compounds and a stream containing the residual solid ash particles via the line for removing the aqueous slurry from the at least one extraction vessel, preferably the last downstream extraction vessel, to means for separating the aqueous slurry into an aqueous liquid stream containing solved recyclable compounds and a stream containing the residual solid ash particles. Said line is preferably a pipe.

Upstream of the at least one extraction vessel, the device preferably comprises means for storing ash collected from an incineration process, preferably from the exhaust gas of an incineration process.

Said storage means is preferably directly connected to the at least one extraction vessel, preferably the first upstream extraction vessel, by means of a feeding line for feeding ash from the means of storing ash to the at least one, preferably to the first upstream extraction vessel.

It is preferred that all embodiments of the device as described above or below also apply for the method of the invention as described above or below.

### Use

In yet another aspect the present invention relates to the use of a vessel for combining and mixing the stream containing the residual solid ash particles with an aqueous washing medium to provide a post-wash aqueous slurry reducing the amount of recyclable compounds in the residual solid ash particles in the method and/or the device as described above or below.

It is preferred that all embodiments of the vessel for combining and mixing the stream containing the residual solid ash particles with an aqueous washing medium to provide a post-wash aqueous slurry as well as the method and the device of the invention as described above or below also apply for the use of said vessel as described above or below.

## Claims

1. A method for washing ash comprising the steps of:
a) collecting ash of an incineration process;
b) combining the ash with an aqueous medium to provide an aqueous slurry;
c) mixing the aqueous slurry for solving recyclable compounds from the solid ash particles;
d) separating the aqueous slurry into an aqueous liquid stream containing solved recyclable compounds and a stream containing the residual solid ash particles; **characterized in that**
e) the stream containing the residual solid ash particles is combined and mixed with an aqueous washing medium to provide a post-wash aqueous slurry; and
f) the post-wash aqueous slurry is separated into an aqueous liquid post-wash stream containing residues of solved recyclable compounds and a post-washed stream containing the residual solid ash particles.

2. The method according to claim 1, wherein the aqueous slurry is separated into the aqueous liquid stream containing solved recyclable compounds and the stream containing the residual solid ash particles in step d) by vacuum-filtration, preferably using a vacuum band filter.

3. The method according to any one of the preceding claims, wherein the aqueous slurry is separated into the aqueous liquid stream containing solved recyclable compounds and the stream containing the residual solid ash particles in step d) by vacuum-filtration using a vacuum band filter, and the stream containing the residual solid ash particles is withdrawn from the vacuum band filter and transported to a vessel for preparing the post-wash aqueous slurry.

4. The method according to any one of the preceding claims, wherein the stream containing the residual solid ash particles is combined with the aqueous washing medium in a vessel and actively mixed, preferably by stirring.

5. The method according to any one of the preceding claims, wherein the aqueous washing medium is selected from is pH neutral water or water comprising an acid, preferably selected from HF, HCl, H₂SO₄, HNO₃, H₃PO₄ or mixtures thereof.

6. The method according to any one of the preceding claims, wherein the post-wash aqueous slurry is separated into the aqueous liquid post-wash stream containing residues of solved recyclable compounds and the post-washed stream containing the residual solid ash particles in step f) by vacuum-filtration, preferably using a vacuum band filter.

7. The method according to any one of the preceding claims, wherein the separation steps d) and f) are conducted by vacuum-filtration using the same single vacuum band filter.

8. The method according to claims 6 or 7, wherein the post-wash aqueous slurry is transported from the vessel to the same single vacuum band filter and is returned to said same single vacuum band filter at the position, where the stream containing the residual solid ash particles is withdrawn from the single vacuum band filter, so that the vacuum of the single vacuum band filter is maintained.

9. The method according to any one of the preceding claims, wherein process steps e) and f) are repeated one to five times, preferably three times.

10. The method according to any one of the preceding claims, wherein process steps d) to f) are continuous process steps.

11. A device for washing ash comprising:
- at least one extraction vessel;
- a line for removing the aqueous slurry from the at least one extraction vessel, preferably the last downstream extraction vessel, to means for separating the aqueous slurry into an aqueous liquid stream containing solved recyclable compounds and a stream containing the residual solid ash particles;
- means for separating the aqueous slurry into an aqueous liquid stream containing solved recyclable compounds and a stream containing the residual solid ash particles;
- a vessel for combining and mixing the stream containing the residual solid ash particles with an aqueous washing medium to provide a post-wash aqueous slurry;
- means for transporting the stream containing the residual solid ash particles from the means for separating the aqueous slurry into an aqueous liquid stream containing solved recyclable compounds and a stream containing the residual solid ash particles to the vessel; and
- means for separating the post-wash aqueous slurry into an aqueous liquid post-wash stream containing residues of solved recyclable compounds and a post-wash stream containing the residual solid ash particles.

12. The device according to claim 11, wherein the means for separating the aqueous slurry into an aqueous liquid stream containing solved recyclable compounds and a stream containing the residual solid ash particles and the means for separating the post-wash aqueous slurry into an aqueous liquid post-wash stream containing residues of solved recyclable compounds and a post-wash stream containing the residual solid ash particles are vacuum band filters, preferably the same single vacuum band filter.

13. The device according to claim 12, further comprising means for transferring the post-wash aqueous slurry from the vessel to the single vacuum band filter, wherein the means for transporting the stream containing the residual solid ash particles from the single vacuum band filter to the vessel and the means for transferring the post-wash aqueous slurry from the vessel to the single vacuum band filter are situated as such that the post-wash aqueous slurry is returned to the single vacuum band filter at the position, where the stream containing the residual solid ash particles is withdrawn from the single vacuum band filter, so that the vacuum of the single vacuum band filter is maintained.

14. The device according to claim 11 to 13, comprising 2 to 6 sets of a vessel for combining and mixing the stream containing the residual solid ash particles with an aqueous washing medium to provide a post-wash aqueous slurry; means for transporting the stream containing the residual solid ash particles from the means for separating the post-wash aqueous slurry into an aqueous liquid post-wash stream containing residues of solved recyclable compounds and a post-wash stream containing the residual solid ash particles to the vessel; and means for separating the post-wash aqueous slurry into an aqueous liquid post-wash stream containing residues of solved recyclable compounds and a post-wash stream containing the residual solid ash particles connected in series.

15. The use of a vessel for combining and mixing the stream containing the residual solid ash particles with an aqueous washing medium to provide a post-wash aqueous slurry for reducing the amount of recyclable compounds in the residual solid ash particles in the method and/or device of any one of claims 1 to 14.
